# EUROPÄISCHE PATENTSCHRIFT

(11) **EP 1 598 137 B1**
(45) Veröffentlichungstag und Bekanntmachung des Hinweises auf die Patenterteilung: **27.06.2007**
(21) Anmeldenummer: 05008339.3
(22) Anmeldetag: 16.04.2005
(51) Int. Cl.: B23F 19/10, B23F 21/12, B23C 5/10, B23C 5/20, B23C 5/22

(54) **Kegelrad-Verzahnmaschine zum Anfasen und/oder Entgraten eines Kegelrades und entsprechendes Verfahren**
Gear manufacturing machine for chamfering and/or deburring a bevel gear and corresponding process
Machine de taillage de roues dentées coniques pour chanfreiner et/ou ébavurer une roue dentée ainsi qu'un procédé correspondant

(30) Priorität: 19.05.2004 DE 202004008263 U
(43) Veröffentlichungstag der Anmeldung: 23.11.2005
(73) Patentinhaber: Klingelnberg GmbH, 42499 Hückeswagen (DE)
(72) Erfinder: Ribbeck, Karl-Martin, 42897 Remscheid (DE)
(74) Vertreter: OK pat AG

(56) Entgegenhaltungen:
- DE-A1- 19 708 601
- DE-A1- 19 744 486
- US-A- 1 626 821
- US-A- 1 836 662
- US-A- 3 036 363
- US-A- 4 697 963
- US-A1- 2003 044 246
- US-E1- R E38 504

## Beschreibung

Die vorliegende Erfindung betrifft eine Kegelrad-Verzahnmaschine nach dem Oberbegriff des Anspruchs 1 und ein Verfahren für das Entgraten und/oder Anfasen von Zahnkanten von Kegelrädern nach dem Oberbegriff des Anspruchs 10.

### Stand der Technik

Beim Fertigen von Kegelrädern entsteht am äusseren Zahnende durch die spanabhebende Bearbeitung ein Grat, und zwar hauptsächlich an der konkaven Flanke, denn diese Flanke bildet mit der Rückenfläche des Kegelradzahnes in der Regel einen relativ spitzen Winkel. Würde man an dieser Stelle nur den Grat entfernen, bliebe eine sehr scharfe Profilkante stehen. Wegen der grossen Verletzungsgefahr, aber auch wegen der Gefahr des Durchhärtens beim Härten der Kegelräder werden diese Kanten häufig durch eine Fase gebrochen. Ist dieser Winkel nicht so spitz, weil das Kegelrad z. B. einen kleinen Spiralwinkel hat, reicht es aus die Kante zu entgraten.

Für dieses Anfasen und/oder Entgraten von Kegelrädern und speziell von Tellerrädern sind Vorrichtungen bekannt, die für konventionelle mechanische Kegelrad-Verzahnmaschinen entwickelt wurden. Schon während des Fräsens der Kegelräder im diskontinuierlichen Teilverfahren werden nach jeder Zahnlücke die Zahnenden entgratet. Oder beim kontinuierlichen Fräsverfahren wird nach dem Verzahnen in einem separaten Arbeitsgang das Anfasen und/oder Entgraten vorgenommen.

Es kommen vielfach auch separat stehende Entgratvorrichtungen zum Einsatz. Bei diesen Vorrichtungen wird der Nachteil der zusätzlichen Werkstückspannung in Kauf genommen, um in der Nähe des Werkstücks mehr Platz zur Verfügung zu haben als in einer Verzahnmaschine, weil sich dann die Entgratwerkzeuge vielseitiger und einfacher auf die jeweiligen Werkstückabmessungen einstellen lassen. Ausserdem können auf einer Verzahnmaschine in gleicher Zeit mehr Kegelräder verzahnt werden, wenn sie dort nicht auch noch entgratet werden müssen.

Bei einer bekannten Entgratvorrichtung, die direkt auf einer Verzahnmaschine eingesetzt wird, kommt ein mehrgängiger Schlagzahnfräser zum Einsatz, dessen Drehachse so eingestellt wird, dass sich die Schneide des Schlagzahnes entlang der anzufasenden Profilkante eines Kegelradzahnes bewegt. Dabei wird nicht im Teilverfahren, sondern bei konstanter Werkstückdrehung gearbeitet, so dass nacheinander jeder folgende Schlagzahn in die nächste Kegelradlücke eingreift. Der entscheidende Nachteil ist jedoch, dass nicht alle Kegelräder auf ihrer Verzahnmaschine mit einem Schlagzahnfräser entgratet werden können. Es wird als ein weiterer Nachteil angesehen, dass spezielle Schlagzahnfräser eingesetzt werden müssen.

Beim Herstellen von Tellerrädern wird das Tellerrad typischerweise nach dem Verzahnen in eine Wechselposition überführt. Während dem Überführen in die Wechselposition kommt ein Entgratfräser zum Einsatz, der im kontinuierlichen Verfahren eine Zahnflanke des Tellerrads nach der anderen entgratet. Der Entgratfräser ist als hinterschliffener Vollstahlfräser aus HSS ausgeführt. Es ist ein Nachteil dieses Prinzips, dass die Schnittgeschwindigkeit der HSS-Stähle begrenzt ist. Dadurch ist die Zeit, die beim Überführen in die Wechselposition vergeht normalerweise nicht ausreichend, um das Entgraten des gesamten Tellerrades abzuschliessen. Es ist ein weiterer Nachteil, dass der Fräser auf Grund des Hinterschliffs in der Gestaltung der Schneidengeometrie gewissen Einschränkungen unterliegt und daher nur jeweils für das Entgraten einer Art von Tellerrädern einsetzbar ist. Will man eine andere Art von Tellerrad entgraten, muss entweder ein anderer Fräser mit anderer Geometrie eingesetzt werden, oder man verwendet einen Fräser, der von der Geometrie der Schneiden nicht optimal ausgelegt ist, sich aber für das Entgraten mehrerer Arten von Tellerrädern eignet. Durch eine solche suboptimale Auslegung der Messergeometrie lassen sich die Fräser zwar für verschiedene Arten von Tellerrädern einsetzen, aber sie können nur mit geringerer Geschwindigkeit betrieben werden, um eine Beschädigung der Schneiden zu verhindern.

Es ist auch möglich die Fräser umzuschleifen, wozu diese üblicherweise eingesandt werden müssen, was zeitaufwendig und teuer ist.

Von daher liegt der Erfindung die Aufgabe zugrunde, eine Kegelrad-Verzahnmaschine so auszugestalten, dass mit geringem apparativem Aufwand sehr verschiedenartige Kegelräder angefast und/oder entgratet werden können.

Eine weitere Aufgabe der Erfindung liegt darin, eine Kegelrad-Verzahnmaschine so auszugestalten, dass die durch das Entgraten bedingte längere Verweildauer des Werkstücks in der Verzahnmaschine relativ kurz ist.

Eine weitere Aufgabe der Erfindung liegt darin, ein entsprechendes Verfahren bereitzustellen.

Die Aufgaben werden erfindungsgemäss durch eine Verzahnmaschine gemäss Anspruch 1 und ein Verfahren gemäss Anspruch 10 gelöst. Vorteilhafte Ausgestaltungen der Erfindung bilden die Gegenstände der Schutzansprüche 2 bis 9, sowie 11.

Das Schneiden der Flächen von Zahnrädern, insbesondere von Kegelrädern, mit Hilfe von mehreren Messern beschreibt die Uns-1,626,821. Das Entgraten mit Hilfe zweier gleichzeitig die beiden Stirnflächen von Kegelrädern bearbeitenden Entgratmesserköpfen, die in einer festen gegenseitigen Relation angeordnet sind, beschreibt die DE-197 44 468.

Es ist ein Vorteil der Erfindung, dass eine entsprechende Kegelrad-Verzahnmaschine flexibel einsetzbar ist. Sie kann je nach Bedarf zum kontinuierlichen Entgraten verschiedenster Arten von Ritzeln umgerüstet werden. Ausserdem bietet die Verwendung von Hartmetallmessereinsätzen eine grössere Freiheit bei der Gestaltung der Scheiden dieser Messereinsätze. Die Handhabung der erfindungsgemässen Vorrichtung ist besonders einfach.

Die wesentlichen Vorteile der Erfindung bestehen darin, dass mit den mittels einer programmierbaren Steuerung numerisch steuerbaren Achsen (NC-Achsen) nahezu beliebig geformte Profilkanten von Kegelrädern mit den Schneiden der Entgratmessereinsätze erreichbar sind. Somit kann auch bei einer gekrümmten Profilkante eine Fase erzeugt und/oder eine Entgratung vorgenommen werden. Es lässt sich Sekundärgrat vermeiden da bei entsprechender steiler Neigung der Entgratmesser in Bezug auf das Kegelrad keine grossen Werkstoffmengen abgehobelt werden müssen, um die volle Zahnhöhe zu entgraten.

Es ist auch vorteilhaft, dass gemäss Erfindung das Anfasen oder Entgraten in einem kontinuierlichen Prozess erfolgt, was zu wesentlich kürzeren Bearbeitungszeiten führt als bei diskontinuierlichen Prozessen. Vorzugsweise erfolgt das Entgraten so schnell, dass die Zeit zum Überführen des Kegelrades in eine Wechselposition ausreicht, um den kontinuierlich ablaufenden Prozess abzuschliessen.

Ausführungsbeispiele der Erfindung werden im Folgenden unter Bezugnahme auf die Zeichnungen näher beschrieben. Es zeigen:
- **FIG. 1**: eine perspektivische Ansicht einer ersten Verzahnmaschine gemäss der vorliegenden Erfindung;
- **FIG. 2**: eine perspektivische Ansicht einer ersten Vorrichtung zur Verwendung in einer Verzahnmaschine gemäss der vorliegenden Erfindung;
- **FIG. 3**: eine Vorderansicht der ersten Vorrichtung, gemäss der vorliegenden Erfindung;
- **FIG. 4**: eine erste Schnittansicht der ersten Vorrichtung, gemäss der vorliegenden Erfindung;
- **FIG. 5**: eine zweite Schnittansicht der ersten Vorrichtung, gemäss der vorliegenden Erfindung;
- **FIG. 6**: eine Vorderansicht der weiteren Vorrichtung, gemäss der vorliegenden Erfindung.

### Detaillierte Beschreibung

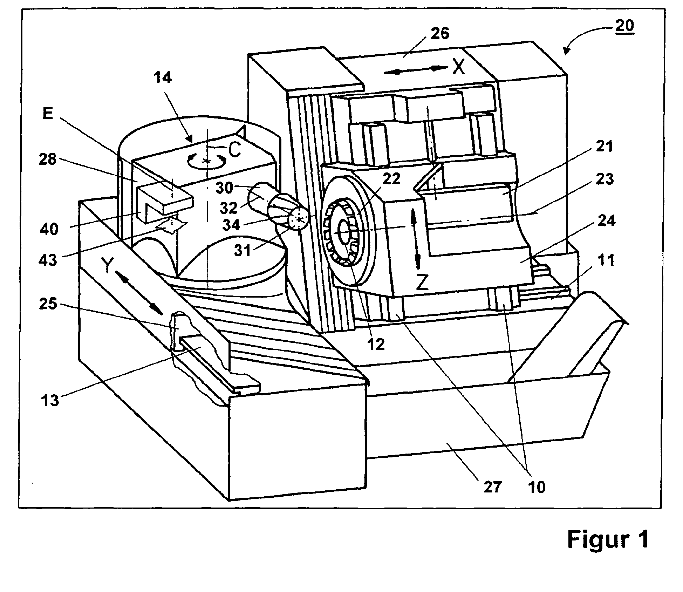

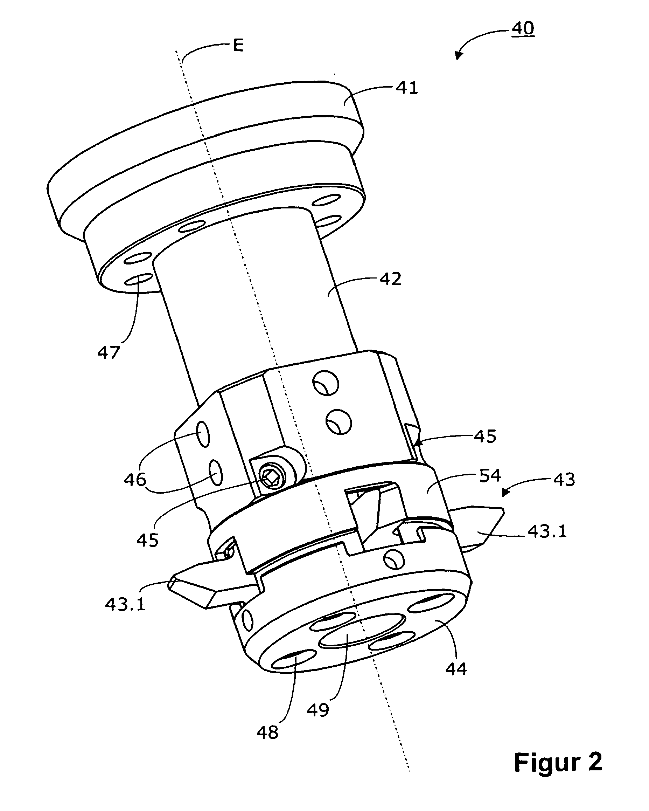

Fig. 1 zeigt in perspektivischer Darstellung den Grundaufbau einer ersten erfindungsgemässen CNC-Maschine 20 zum Herstellen von bogenverzahnten Kegelrädern 31. Eine solche Maschine 20 kann erfindungsgemäss ausgelegt oder umgerüstet werden, um ein Entgraten oder Anfasen des Kegelrades 31 mittels spezieller Entgratmessereinsätze 43.1 (siehe Fig. 2) zu ermöglichen, die Teil eines Entgratmesserkopfes 43 sind, der über eine Zustellvorrichtung 40 bewegbar ist.

Die CNC-Maschine 20 kann wie folgt aufgebaut sein. Auf einem Maschinenbett 21 ist ein Maschinengehäuse 26 entlang einer geraden Koordinatenachse X (1. Achse) horizontal und linear geführt. Ein erster Schlitten 24 ist auf einer Führung 10, die an einer Seitenfläche des Maschinengehäuses 26 angebracht ist, entlang einer geraden Koordinatenachse Z (2. Achse) mittels eines Spindeltriebs 21 in der Höhe verfahrbar. Auf dem Maschinenbett 11 ist ein Werkstückspindelträger 14 mit einem zweiten Schlitten 25 entlang einer geraden Koordinatenachse Y (3. Achse), die zur X-Achse rechtwinkelig ist, auf einer Führung 13 horizontal und linear geführt. Auf dem Schlitten 25 befindet sich eine erste Schwenkvorrichtung 28 mit vertikaler Achse C (4. Achse). Die Führung 10 des ersten Schlittens 24 und die Z-Achse sind gegen die Vertikale geneigt.

Der erste Schlitten 24 trägt eine um eine Werkzeugspindelachse 23 (5. Achse) drehbar gelagerte Werkzeugspindel 12. Die Werkzeugspindel 12 trägt ein Werkzeug, hier beispielshalber einen Messerkopf 22 mit mehreren Stabmessern. Durch den zweiten Schlitten 25 und durch die erste Schwenkvorrichtung 28 ist eine Werkstückspindel 30 auf dem Maschinenbett 21 horizontal geführt und linear verschiebbar bzw. schwenkbar. Die erste Schwenkvorrichtung 28 trägt die Werkstückspindel 30, die um eine Werkstückspindelachse 32 (6. Achse) drehbar ist. Die Werkstückspindel 30 trägt ein Werkstück 31, im vorliegendem Beispiel ein bogenverzahntes Kegelradritzel. Die erste Schwenkvorrichtung 28 ist um die C- Achse horizontal geführt schwenkbar, um das Werkstück 31 in eine Bearbeitungsposition zu schwenken. Ausserdem ist zum Beispiel eine Zustellvorrichtung vorgesehen, um gemäss Erfindung eine relative Schwenk- und/oder Zustellbewegungen zwischen dem Entgratmesserkopf 43 und dem Werkstück 31 ausführen zu können. Diese zweite Zustellvorrichtung ist in Fig.1 nicht zu erkennen. Die erwähnten Schwenk- und/oder Zustellbewegungen dienen dazu die Entgratmesser 43.1 des Entgratmesserkopfes 43 in eine Ausgangsposition zu bringen. Dann werden das Werkstück 31 um die Werkstückspindelachse 32 und der Entgratmesserkopf 43 um eine Rotationsachse E (7. Achse) gedreht und in einem kontinuierlichen Verfahren führen die Entgratmesser 43.1 des Entgratmesserkopfes 43 an den vorbestimmten Kanten des Kegelradritzels 31 entsprechende Anfas- und/oder Entgratungsbewegungen aus.

Wie in Fig. 1 angedeutet, kann die Rotationsachse E des Entgratmesserkopfs 43 zum Beispiel parallel zur C-Achse verlaufen. Es ist aber auch möglich die Rotationsachse E des Entgratmesserkopfs 43 mit einem Winkel in Bezug auf die C-Achse vorzusehen. Weitere Details zu dem Entgratmesserkopf 43 werden in einem der folgenden Abschnitte beschrieben.

Insgesamt weist die Maschine 20 im gezeigten Beispiel also sieben numerisch gesteuerte Achsen auf, wenn man für die Schwenkbewegung die mit der zweiten Schwenkvorrichtung erzielt wird keine eigene numerische Steuerung vorsieht. Vorzugsweise wird jedoch auch für diese Schwenkbewegung eine numerisch steuerbar Achse vorgesehen. Es können aber auch Maschinen mit einer anderen Anzahl Achsen eingesetzt werden, wobei mindestens fünf numerisch gesteuerte Achsen (für ein diskontinuierlich arbeitendes Verfahren) vorhanden sein müssen.

Um das erfindungsgemässe Entgraten im kontinuierlichen Verfahren realisieren zu können, werden besonders Maschinen mit mindestens sechs numerisch gesteuerten Achsen bevorzugt.

Es können jedoch auch andere CNC-Verzahnmaschinen gemäss Erfindung umgerüstet oder ausgestattet werden, wobei Maschinen mit sieben oder acht numerisch gesteuerten Achsen bevorzugt sind.

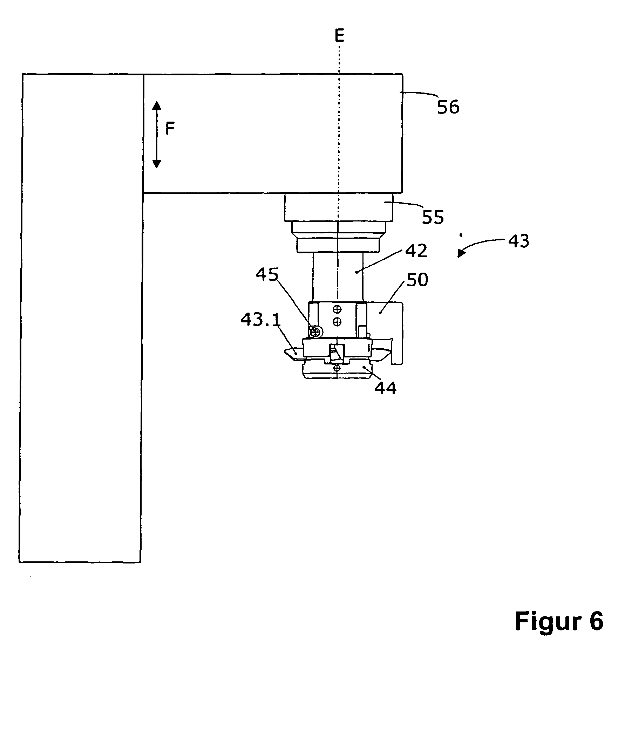

Es besteht auch die Möglichkeit eine CNC-Verzahnmaschine mit einem separaten Entgratmesserkopf auszustatten, der um die E-Achse drehbar und parallel zu einer Achse F zustellbar ist, wie in Fig. 6 angedeutet. Es kann auch eine Zustellvorrichtung vorgesehen sein, um eine Zustell- und/oder Schwenkbewegung relativ zum Werkstück ausführen zu können, bei welcher die Entgratmesser 43.1 des Entgratmesserkopfs 43 in die richtige Ausgangsposition gebracht werden.

Die Verzahnmaschine 20 gemäss Erfindung weist, wie bereits beschrieben, eine Werkstückspindel 30 auf, welche das zu bearbeitende Kegelrad 31 koaxial zur Werkstückspindelachse 32 aufnimmt. Es ist ein erster Schlitten 24 mit Werkzeugspindel 12 vorgesehen, um einen tellerförmigen Messerkopf 22 mit mehreren Stabmessern aufzunehmen. Eine weitere Achse E ist vorgesehen, um eine erfindungsgemässe Vorrichtung 43 mit mehreren Entgratmessern 43.1 aufzunehmen und geeignet zu drehen. Ausserdem ist eine Zustellvorrichtung 40 vorgesehen, um den Entgratmesserkopf 43 in die richtige Ausgangsposition zu bringen. Die Verzahnmaschine 20 hat, wie erwähnt, mehrere, zum Beispiel sechs, sieben oder acht, numerisch steuerbare Achsen, die über eine programmierbare Steuerung ansteuerbar sind, wobei eine der Achsen die Werkstückspindelachse 32 der genannten Werkstückspindel 30 bildet. Eine andere Achse dient als Werkzeugspindelachse 23 des tellerförmigen Messerkopfes 22 und eine Achse E dient als Entgratspindelachse der erfindungsgemässen Vorrichtung 43 mit Entgratmessern 43.1. Die numerisch steuerbaren Achsen sind so ausgebildet und angeordnet, dass durch das Verstellen mindestens einer der Achsen die Werkstückspindel 30 samt dem Kegelrad 31 relativ zu dem Entgratmesserkopf 43 mit den mehreren Entgratmessern 43.1 so bewegbar ist, dass die Entgratmesser 43.1 bei gleichzeitigem Rotieren der Werkstückspindel 30 um die Werkstückspindelachse 32 und des Entgratmesserkopfes 43 mit den Entgratmessern 43.1 um die Entgratspindelachse E nacheinander in Zahnzwischenräume benachbarter Zähne des Kegelrads 31 eintauchen und eine Anfas- oder Entgratungsbewegung in Bezug auf die vorgegebenen Kanten des Kegelrads 31 ausführen.

In einer besonders bevorzugten Ausführungsform reicht zum Anfasen und/oder Entgraten eine Rotation des Entgratmesserkopfs 43 um die Entgratspindelachse E und eine Rotation des Werkstücke 31 um die Werkstückspindelachse 32.

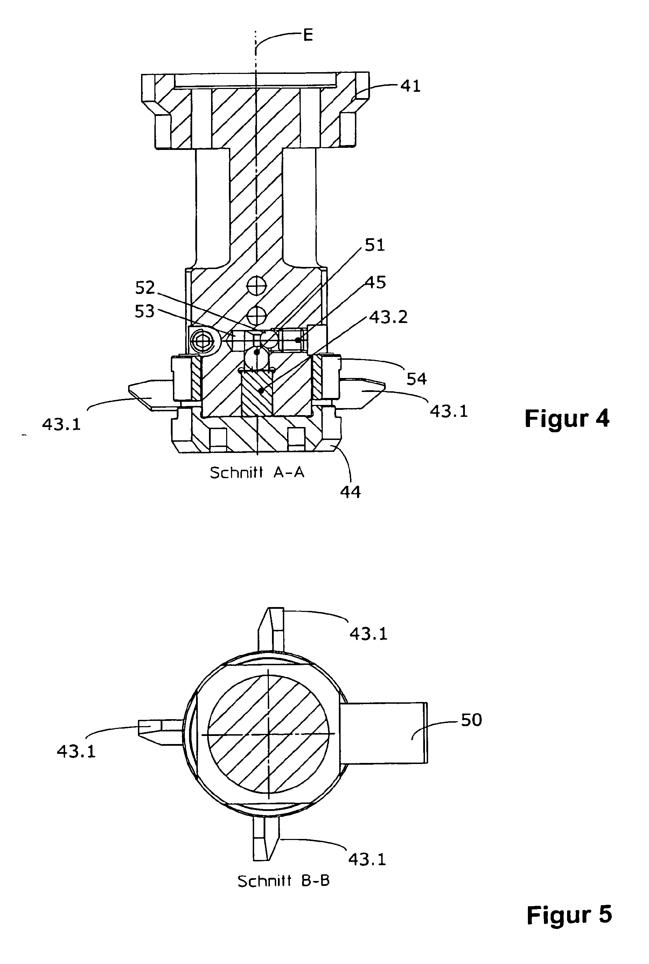

Gemäss Erfindung werden vorzugsweise eine oder mehrere eigene NC-Achsen für die Schnittbewegung der Entgratmesser 43.1 des Entgratmesserkopfs 43 vorgesehen. Diese NC-Achse(n) dienen dazu den Entgratmesserkopf 43, wie in den Figuren 2 bis 5 anhand eines Beispiels gezeigt, relativ zu dem Werkstück 31 zu bewegen. Der Entgratmesserkopf 43 wird über eine Platte 41 und Schrauben 47 an einer Entgratspindel 55 (siehe zum Beispiel Fig. 6) verschraubt. Es ist ein Grundhalter 42 vorgesehen, der verschiedene Elemente zur Aufnahme von Entgratmessern 43.1 aufweist. Der Entgratmesserkopf 43 weist mehrere stabmesserartige Messereinsätze 43.1 auf, die in Ausnehmungen des Entgratmesserkopfs 43 einsetzbar sind, wobei die Messereinsätze 43.1 im Wesentlichen radial zu der Entgratspindelachse E der Entgratspindel 55 gerichtet sind, wie zum Beispiel in Fig. 5 zu erkennen ist. Jeder der Messereinsätze 43.1 weist Schneiden zum Anfasen und/oder Entgraten des Werkstücks 31 auf. Besonders vorteilhaft ist eine Ausführungsform, die mit vier Messereinsätzen 43.1 ausgestattet ist, wobei diese Messereinsätze 43.1 in einem gegenseitigen Winkel von 90 Grad angeordnet sind. Statt den Ausnehmungen am Entgratmesserkopf 43 können auch andere Befestigungsmittel zum Festklemmen oder Befestigen der Messereinsätze 43.1 vorgesehen sein.

Vorzugsweise ist der Entgratmesserkopf 43 so ausgeführt, dass die einzelnen Entgratmesser 43.1 durch das Lösen individueller Klemmschrauben 45 gelockert und dann entnommen werden können. Somit kann der Entgratmesserkopf 43 je nach Bedarf unterschiedlich bestückt werden. Besonders vorteilhaft ist eine Ausführungsform, die pro Messereinsatz 43.1 je eine Klemmkugel 51 und ein Klemmelement vorsieht, wobei das Klemmelement eine Klemmschraube 55, eine Kugel 52 mit kleinerem Durchmesser und einen Zapfen 53 vorsieht. Wie in der Schnittansicht in Fig. 4 zu erkennen, werden der Zapfen 53, die Kugel 52 und die Klemmschraube 45 hintereinander in einem Loch des Grundhalters 42 in einer Reihe angeordnet. Die Klemmkugel 51 sitzt zwischen dem Messereinsatz 43.1 und dem Klemmelement. Wird nun die Klemmschraube 45 in das Loch des Grundhalters 42 eingeschraubt, so verschiebt sich die Kugel 52 in Richtung der Entgratspindelachse E. Durch diese Verschiebung wird die Klemmkugel 51 nach unten gedrückt und der Messereinsatz 43 fixiert. Vorzugsweise wird eine Madenschraube mit Innensechskant als Klemmschraube 45 eingesetzt.

Bevorzugt ist eine Ausführungsform, die, wie in den Figuren 2 bis 5 gezeigt, einen modularen Aufbau hat. Der zylindrisch geformte Grundhalter 42 weist im unteren Bereich n (vorzugsweise mit n = 1, 2, 3, 4, 5, 6) rechteckförmige Ausnehmungen auf, deren Grösse auf den Querschnitt des Schaftes der Messereinsätze 43.1 ausgelegt ist. In Fig. 4 ist ein Schnitt durch den rechteckförmigen Schaft 43.2 eines Messereinsatzes 43.1 gezeigt. Es kann ein Ring 54 auf den unteren Bereich des Grundhalters 42 aufgeschoben werden, wie in den Figuren 2 bis 4 zu erkennen ist. Der Ring 54 hat vorzugsweise Ausnehmungen, die teilweise um die Messereinsätze 43.1 herum greifen.

In einer weiteren bevorzugten Ausführungsform ist ein Klemmdeckel 44 vorgesehen, der den unteren Bereich des Entgratmesserkopfs 43 abdeckt, wie in Fig. 2 zu erkennen ist. Der Klemmdeckel 44 kann zum Beispiel durch eine Steck- oder Klemmverbindung mit dem Grundhalter 42 verbunden werden. Der Klemmdeckel 44 kann vier Löcher 48 aufweisen, die einen Zugang zu Schrauben ermöglichen, die den Klemmdeckel 44 halten, der als Gegenhalter für die Messereinsätze 43.1 dient. In der Mitte des Klemmdeckels 44 ist eine Öffnung 49 vorgesehen, um zum Beispiel den Schaft einer optionalen Schleifbürste oder dergleichen einstecken oder einschrauben zu können. Der Schaft der Schleifbürste sitzt dann koaxial zur Entgratspindelachse E.

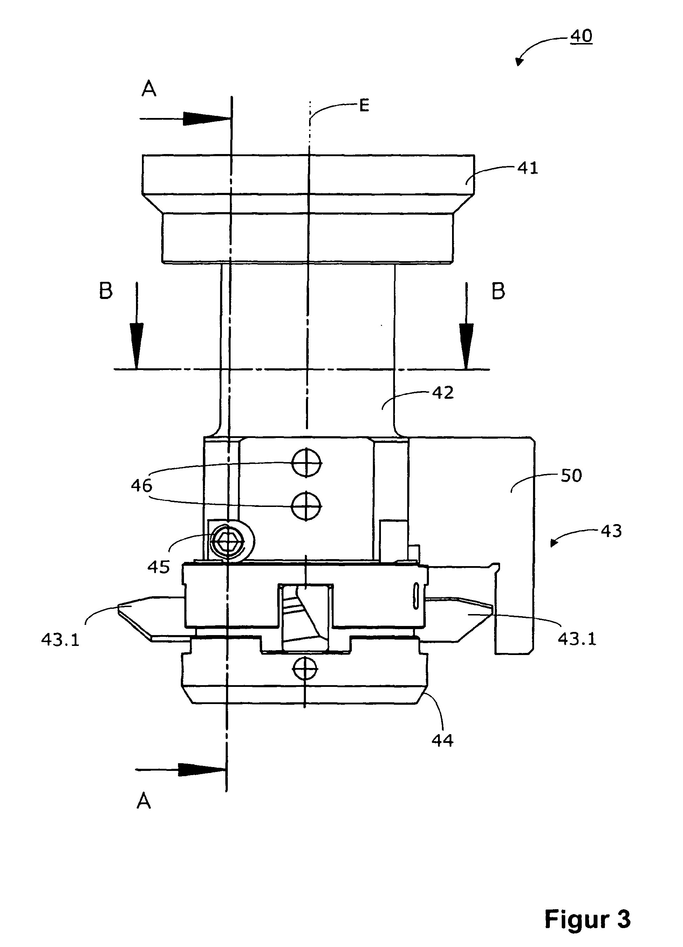

Optional kann der Entgratmesserkopf 43 so ausgeführt sein, dass eine Messereinstelllehre 50 befestigt werden kann, wie zum Beispiel in Fig. 3 und in Fig. 5 gezeigt. In dem gezeigten Beispiel wird die Messereinstelllehre 50 oberhalb eines Messereinsatzes 43.1 am Grundhalter 42 angesetzt. Ein Schenkel 50.1 der Messereinstelllehre 50 definiert genau den Punkt des Messereinsatzes 43.1, der am weitesten in radialer Richtung von der Entgratspindelachse E entfernt ist. Die Messereinstelllehre 50 gibt dem Messereinsatz 43.1 eine genaue Position vor. Nachdem der Messereinsatz 43.1 durch Anziehen der Klemmschraube 45 befestigt worden ist, kann die Messereinstelllehre 50 entfernt werden. Vorzugsweise wird die Messereinstelllehre 50 mit zwei Stiften oder Schrauben am Grundhalter 42 befestigt. Zu diesem Zweck können oberhalb jedes Messereinsatz 43.1 am Grundhalter 42 zwei Löcher 46 vorgesehen sein.

Eine weitere Ausführungsform ist in Fig. 6 gezeigt. Es ist bei dieser Ausführungsform eine Zustellvorrichtung 56 vorgesehen, um gemäss Erfindung relative Schwenk- und/oder Zustellbewegungen zwischen dem Entgratmesserkopf 43 und einem nicht gezeigten Werkstück 31 ausführen zu können. Der Entgratmesserkopf 43 ist um die E-Achse drehbar und parallel zu einer Achse F zustellbar, wie in Fig. 6 angedeutet.

Der Metalleinsatz 43 kann entweder aus Hartmetall, aus Werkzeugstahl oder aus Schneidkeramik gefertigt sein. Dies ist ein wesentlicher Unterschied zu herkömmlichen Entgratfräsern. In einer bevorzugten Ausführungsform wird micro-grain Hartmetall verwendet, weil dann die Scheiden der Messereinsätze 43.1 lange scharf bleiben und sauber schneiden.

Besonders vorteilhaft sind Messereinsätze 43.1, die im Bereich der Schneiden geschliffen sind, wobei die Messereinsätze 43.1 vorzugsweise einen sogenannten Zwei-Flanken- oder einen Drei-Flanken-Schliff aufweisen. Der Zwei-Flanken-Schliff hat den Vorteil, dass er einfacher zu Schleifen ist. Drei-Flanken-Schliff ist vorteilhaft, da alle drei Flanken relativ frei wählbar sind.

Es können speziell geformte Entgratmessereinsätze 43.1 aus Hartmetall eingesetzt werden. Diese Entgratmessereinsätze 43.1 können so ausgeführt sein, dass sie speziell für das jeweilige Kegelrad die ideale Geometrie zum Entgraten oder Anfasen aufweisen. Ausserdem können derartige Entgratmessereinsätze 43.1 relativ einfach ausgebaut und nachgeschliffen werden, falls die Schneide(n) stumpf sein sollten.

Ausserdem entfällt gemäss Erfindung das komplizierte und zu Bedienfehlern führende Umrüsten oder Warten, da ein Ab- und Anbau des Entgratfräsers von der Maschine nicht erfolgen muss.

Es entstehen für das Entgraten auf der Verzahnmaschine keine nennenswerten Zeitverluste, da dank der Verwendung spezieller Messereinsätze 43.1 im kontinuierlichen Verfahren mit relativ hohen Schnittgeschwindigkeiten gearbeitet werden kann. Je nach Ausführungsform reicht die Zeit aus, die zum Überführen des Werkstücks 31 von einer Bearbeitungsposition in eine Entnahmeposition benötigt wird, um das Anfasen oder Entgraten durchzuführen.

## Patentansprüche

1. Kegelrad-Verzahnmaschine (20) zum Anfasen und/oder Entgraten von Kanten an den Zähnen eines Kegelrades (31) in einem kontinuierlichen Prozess, wobei die Verzahnmaschine (20) eine Werkstückspindel (30), welche das Kegelrad (31) koaxial zu einer Spindelachse (32) aufnimmt, eine Werkzeugspindel (12) zur Aufnahme eines Messerkopfes (22) mit mehreren Stabmessern und mindestens sechs numerisch steuerbare Achsen aufweist, **dadurch gekennzeichnet, dass** die Verzahnmaschine (20) zusätzlich eine Entgratspindel (55) und einen Entgratmesserkopf (43) aufweist, mit mehreren als Messereinsätze (43.1) ausgebildeten Entgratwerkzeugen, wobei jeder der Messereinsätze (43.1) stabartig geformt ist, einen Schaft (43.2) zum Einspannen (43) an dem Entgratmesserkopf (43) und ein freies Ende mit mindestens einer Schneide zum Anfasen und/oder Entgraten der Kanten eines Kegelrades (31) aufweist, wobei der Entgratmesserkopf (43) umfasst:
- einen Anschlussbereich (41) zum Befestigen des Entgratmesserkopfs (43) an der Entgratspindel (55) der Kegelrad-Verzahnmaschine (20),
- einen Grundhalter (42), der sich entlang einer Entgratspindelachse (E) der Entgratspindel (55) erstreckt und an einem Ende in den Anschlussbereich (41) übergeht und an einem anderen Ende mehrere Befestigungsmittel (45, 51, 52, 53) zum Einspannen der Schäfte (43.2) aufweist, wobei die Befestigungsmittel (45, 51, 52, 53) so ausgelegt sind, dass die Messereinsätze (43.1) nach dem Einspannen im Wesentlichen radial zu der Entgratspindelachse (E) gerichtet sind.

2. Kegelrad-Verzahnmaschine (20) nach Anspruch 1, **dadurch gekennzeichnet, dass** die Messereinsätze (43.1) im Bereich der Schneiden geschliffen sind, wobei die Messereinsätze (43.1) einen Zwei-Flanken oder einen Drei-Flanken-Schliff aufweisen.

3. Kegelrad-Verzahnmaschine (20) nach einem der Ansprüche 1 oder 2, **dadurch gekennzeichnet, dass** der Entgratmesserkopf (43) pro Messereinsatz (43,1) eine Klemmschraube (45) aufweist, die es erlaubt den Messereinsatz (43.1) zu lösen oder zu fixieren.

4. Kegelrad-Verzahnmaschine (20) nach einem der Ansprüche 1 oder 2, **dadurch gekennzeichnet, dass** der Entgratmesserkopf (43) pro Messereinsatz (43.1) eine Klemmschraube (45) und ein Klemmelement mit einer Klemmkugel (51) aufweist, die es erlauben den Messereinsatz (43.1) zu lösen oder zu fixieren.

5. Kegelrad-Verzahnmaschine (20) nach Anspruch **1, dadurch gekennzeichnet, dass** die Befestigungsmittel (45, 51, 52, 53) vorzugsweise eine Klemmschraube (45) und eine Kugel (51) umfassen, die auf den Schaft (43.2) einwirken und diesen beim Anziehen der Klemmschraube (45) festklemmen.

6. Kegelrad-Verzahnmaschine (20) nach Anspruch **1** oder **2, dadurch gekennzeichnet, dass** der Entgratmesserkopf (43) eine Messereinstelllehre (50) umfasst, die abnehmbar ist, wobei mit der Messereinstelllehre (50) die Einbauposition der Messereinsätze (43.1) definierbar ist.

7. Kegelrad-Verzahnmaschine (20) nach Anspruch **1** oder **2, dadurch gekennzeichnet, dass** der Entgratmesserkopf (43) eine Schleifbürste umfasst, die in den Entgratmesserkopf (43) eingesteckt oder an den Entgratmesserkopf (43) angeschraubt ist, wobei ein Schaft der Schleifbürste koaxial zu der Entgratspindelachse (E) ausgerichtet ist.

8. Kegelrad-Verzahnmaschine (20) nach einem der vorhergehenden Ansprüche, **dadurch gekennzeichnet, dass** der Entgratmesserkopf (43) einen modularen Aufbau hat.

9. Kegelrad-Verzahnmaschine (20) nach einem der vorhergehenden Ansprüche, **dadurch gekennzeichnet, dass** der Entgratmesserkopf (43) einen Klemmdeckel (44) umfasst, der einen unteren Bereich des Entgratmesserkopfs (43) abdeckt.

10. Verfahren zum Anfasen und/oder Entgraten von Kanten an den Zähnen eines Kegelrades (31) in einer Verzahnmaschine (20) nach einem der Ansprüche 1 - 9, die eine Werkstückspindel (30), welche das Kegelrad (31) koaxial zu einer Spindelachse (32) aufnimmt, eine Werkzeugspindel (12), die ein Werkzeug (22) aufnimmt, und mindestens sechs numerisch steuerbare Achsen aufweist, **dadurch gekennzeichnet, dass** das Verfahren folgende Schritte umfasst:
- Ausführen einer relativen Zustell- und/oder Schwenkbewegung zwischen dem Entgratmesserkopf (43) und dem Kegelrad (31), wobei durch die Zustell- und/oder Schwenkbewegung der Entgratmesserkopf (43) in eine Ausgangsposition für das Anfasen und/oder Entgraten gebracht wird,
- Drehen des Kegelrads (31) um eine Werkstückspindelachse (32) der Werkstückspindel (30),
- Drehen des Entgratmesserkopfs (43) um eine Rotationsachse (E), und
- mit den Messereinsätzen (43.1) des Entgratmesserkopfes (43) Ausführen von Anfas- und/oder Entgratungsbewegungen in einem kontinuierlichen Verfahren an vorbestimmten Kanten des Kegelrads (31).

11. Verfahren nach Anspruch **10, dadurch gekennzeichnet, dass** das Verfahren folgenden Schritt umfasst:
- Befestigen einer Messereinstelllehre (50) an dem Entgratmesserkopf (43), um die Einbauposition der Messereinsätze (43.1) beim Einsetzen und Befestigen zu definieren.

## Claims

1. A bevel gear cutting machine (20) for chamfering and/or de-burring edges on the teeth of a bevel gear (31) in a continuous process, the gear cutting machine (20) having a workpiece spindle (30), which receives the bevel gear (31) coaxially to a spindle axis (32), a tool spindle (12) for receiving a cutter head (22) having multiple rod cutters, and at least six numerically controllable axes, **characterized in that** the gear cutting machine (20) additionally has a de-burring spindle (55) and a de-burring cutter head (43), having multiple de-burring tools implemented as cutter inserts (43.1), each of the cutter inserts (43.1) being rod shaped, having a shaft (43.2) for chucking (43) on the de-burring cutter head (43), and a free end having at least one cutting edge for chamfering and/or de-burring the edges of a bevel gear (31), the de-burring cutter head (43) comprising:
- an attachment area (41) for fastening the de-burring cutter head (43) to the de-burring spindle (55) of the bevel gear cutting machine (20),
- a main holder (42), which extends along a de-burring spindle axis (E) of the de-burring spindle (55) and passes at one end into the connection area (41) and has multiple fastening means (45, 51, 52, 53) for chucking the shafts (43.2) at the other end, the fastening means (45, 51, 52, 53) being designed in such a way that the cutter inserts (43.1) are directed essentially radially to the de-burring spindle axis (E) after the chucking.

2. The bevel gear cutting machine (20) according to Claim 1, **characterized in that** the cutter inserts (43.1) are ground in the area of the cutting edges, the cutter inserts (43.1) having a two-flank or a three-flank grind.

3. The bevel gear cutting machine (20) according to one of Claims 1 or 2, **characterized in that** the de-burring cutter head (43) has one clamping screw (45) per cutter insert (43.1), which allows the cutter insert (43.1) to be loosened or fixed.

4. The bevel gear cutting machine (20) according to one of Claims 1 or 2, **characterized in that** the de-burring cutter head (43) has one clamping screw (45) and one clamping element having a clamping ball (51) per cutter insert (43.1), which allow the cutter insert (43.1) to be loosened or fixed.

5. The bevel gear cutting machine (20) according to Claim 1, **characterized in that** the fastening means (45, 51, 52, 53) preferably comprises a clamping screw (45) and a ball (51) which act on the shaft (43.2) and clamp it when the clamping screw (45) is tightened.

6. The bevel gear cutting machine (20) according to Claim 1 or 2, **characterized in that** the de-burring cutter head (43) comprises a cutter setting gauge (50), which is removable, the installation position of the cutter inserts (43.1) being definable using the cutter setting gauge (50).

7. The bevel gear cutting machine (20) according to Claim 1 or 2, **characterized in that** the de-burring cutter head (43) comprises a polishing brush, which is inserted into the de-burring cutter head (43) or screwed onto the de-burring cutter head (43), a shaft of the polishing brush being oriented coaxially to the de-burring spindle axis (E).

8. The bevel gear cutting machine (20) according to one of the preceding claims, **characterized in that** the deburring cutter head (43) has a modular construction.

9. The bevel gear cutting machine (20) according to one of the preceding claims, **characterized in that** the de-burring cutter head (43) comprises a clamping cover (44), which covers a lower area of the de-burring cutter head (43).

10. A method for chamfering and/or de-burring edges on the teeth of a bevel gear (31) in a gear cutting machine (20) according to one of Claims 1 through 9, which has a workpiece spindle (30), which receives the bevel gear (31) coaxially to a spindle axis (32), a tool spindle (12), which receives a tool (22), and at least six numerically controllable axes, **characterized in that** the method comprises the following steps:
- executing a relative feed and/or pivot movement between the de-burring cutter head (43) and the bevel gear (31), the de-burring cutter head (43) being brought into a starting position for the chamfering and/or de-burring by the feed and/or pivot movement,
- rotating the bevel gear (31) around a workpiece spindle axis (32) of the workpiece spindle (30),
- rotating the de-burring cutter head (43) around a rotational axis (E), and
- executing chamfering and/or de-burring movements in a continuous method on predetermined edges of the bevel gear (31) using the cutter inserts (43.1) of the de-burring cutter head (43).

11. The method according to Claim 10, **characterized in that** the method comprises the following steps:
- attaching a cutter setting gauge (50) to the de-burring cutter head (43) in order to define the installation position of the cutter inserts (43.1) during insertion and fastening.

## Revendications

1. Machine à tailler les dentures de pignons coniques (20) pour le chanfreinage et/ou l'ébavurage des arêtes des dents d'un pignon conique (31) dans un processus en continu, laquelle machine possède une broche porte-pièce (30) recevant le pignon conique (31) de façon coaxiale d'un axe de broche (32), une broche porte-outil (12) destinée à recevoir une tête de couteaux (22) avec plusieurs couteaux frappeurs et au moins six axes à commande numérique, **caractérisée en ce que** la machine à tailler les dentures de pignons coniques (20) possède en outre une broche à ébavurer (55) et une tête de couteaux à ébavurer (43), avec plusieurs outils d'ébavurage conçus comme des inserts de couteau (43.1), chacun des inserts de couteau (43.1) étant en forme de barre, ayant un corps (43.2) pour le serrage (43) sur la tête de couteaux à ébavurer (43) et une extrémité libre avec au moins un tranchant pour le chanfreinage et/ou l'ébavurage des arêtes d'un pignon conique (31), la tête de couteaux à ébavurer (43) comprenant:
- une zone de raccordement (41) pour la fixation de la tête de couteaux à ébavurer (43) sur la broche à ébavurer (55) de la machine à tailler les dentures de pignons coniques (20),
- une fixation de base (42) qui s'étend le long d'un axe de broche à ébavurer (E) de la broche à ébavurer (55) et qui se passe à une extrémité par une zone de raccordement (41) et possède à une autre extrémité plusieurs moyens de fixation (45, 51, 52, 53) pour un serrage des corps (43.2), les moyens de fixation (45, 51, 52, 53) étant conçus de telle sorte que les inserts de couteau (43.1) sont sensiblement orientés, après le serrage, dans le sens radial par rapport à l'axe de la broche d'ébavurage (E).

2. Machine à tailler les dentures de pignons coniques (20) selon la revendication 1, **caractérisée en ce que** les inserts de couteau (43.1) sont meulés dans la région des tranchants, les inserts de couteau (43.1) recevant un meulage à deux flancs ou à trois flancs.

3. Machine à tailler les dentures de pignons coniques (20) selon l'une des revendications 1 ou 2, **caractérisée en ce que** la tête de couteaux à ébavurer (43) possède pour chaque insert de couteau (43.1) une vis de serrage (45) qui permet de desserrer ou de fixer l'insert de couteau (43.1).

4. Machine à tailler les dentures de pignons coniques (20) selon l'une des revendications 1 ou 2, **caractérisée en ce que** la tête de couteaux à ébavurer (43) possède pour chaque insert de couteau (43.1) une vis de serrage (45) et un élément de serrage avec une bille de serrage (51), qui permettent de desserrer ou de serrer l'insert de couteau (43.1).

5. Machine à tailler les dentures de pignons coniques (20) selon la revendication 1, **caractérisée en ce que** les moyens de fixation (45, 51, 52, 53) comprennent de préférence une vis de serrage (45) et une bille (51) qui agissent sur le corps (43.2) et immobilisent celui-ci lors du serrage de la vis de serrage (45).

6. Machine à tailler les dentures de pignons coniques (20) selon la revendication 1 ou 2, **caractérisée en ce que** la tête de couteaux à ébavurer (43) comporte un gabarit d'ajustement des couteaux (50) amovible, lequel gabarit d'ajustement des couteaux (50) permet de définir la position de montage des inserts de couteau (43.1).

7. Machine à tailler les dentures de pignons coniques (20) selon la revendication 1 ou 2, **caractérisée en ce que** la tête de couteaux à ébavurer (43) comporte une brosse à meuler qui est enfilée dans la tête de couteaux à ébavurer (43) ou vissée sur la tête de couteaux à ébavurer (43), un corps de la brosse à meuler étant coaxial par rapport à l'axe de broche à ébavurer (E).

8. Machine à tailler les dentures de pignons coniques (20) selon l'une des revendications précédentes **caractérisée en ce que** la tête de couteaux à ébavurer (43) a une construction modulaire.

9. Machine à tailler les dentures de pignons coniques (20) selon l'une des revendications précédentes, **caractérisée en ce que** la tête de couteaux à ébavurer (43) comporte un couvercle de serrage (44) qui recouvre une partie inférieure de la tête de couteaux à ébavurer (43).

10. Procédé pour chanfreiner et/ou ébavurer les arêtes des dents d'un pignon conique (31) dans une machine à tailler les dentures de pignons coniques (20) selon l'une des revendications 1 à 9, possédant une broche porte-pièce (30) qui reçoit le pignon conique (31) de façon coaxiale d'un axe de broche (32), une broche porte-outil (12) recevant un outil (22) et au moins six axes à commande numérique, **caractérisé en ce que** le procédé comprend les étapes suivantes:
- exécution d'un mouvement relatif d'amenée et/ou de pivotement entre la tête de couteaux à ébavurer (43) et le pignon conique (31), le mouvement d'amenée et/ou de pivotement amenant la tête de couteaux à ébavurer (43) dans une position de départ pour le chanfreinage et/ou l'ébavurage,
- rotation du pignon conique (31) autour d'un axe de broche porte-pièce (32) de la broche porte-pièce (30),
- rotation de la tête de couteaux à ébavurer (43) autour d'un axe de rotation (E), et
- exécution, avec les inserts de couteau (43.1) de la tête de couteaux à ébavurer (43), de mouvements de chanfreinage et/ou d'ébavurage selon un processus en continu sur des arêtes prédéterminées du pignon conique (31).

11. Procédé selon la revendication 10, **caractérisé en ce que** le procédé comprend l'étape suivante:
- fixation d'un gabarit d'ajustement des couteaux (50) sur la tête de couteaux à ébavurer (43) afin de définir la position de montage des inserts de couteau (43.1) lors de l'insertion et de la fixation.
